# EUROPÄISCHE PATENTSCHRIFT

(11) **EP 2 984 693 B1**
(45) Veröffentlichungstag und Bekanntmachung des Hinweises auf die Patenterteilung: **09.10.2019**
(21) Anmeldenummer: 14716558.3
(22) Anmeldetag: 08.04.2014
(51) Int. Cl.: H01M 8/0202, H01M 8/021, H01M 8/0215, H01M 8/0228, H01M 8/0232, H01M 8/0273, H01M 8/0297

(54) **INTERKONNEKTORELEMENT UND VERFAHREN ZUR HERSTELLUNG EINES INTERKONNEKTORELEMENTS**
INTERCONNECTOR ELEMENT AND METHOD FOR PRODUCING AN INTERCONNECTOR ELEMENT
ÉLÉMENT INTERCONNECTEUR ET PROCÉDÉ DE PRODUCTION D'UN ÉLÉMENT INTERCONNECTEUR

(30) Priorität: 12.04.2013 DE 102013206590
(43) Veröffentlichungstag der Anmeldung: 17.02.2016
(73) Patentinhaber: ElringKlinger AG, 72581 Dettingen (DE)
(72) Erfinder: KIEFER, Thomas, 76337 Waldbronn (DE); BEDNAREK, Timo, CH-8352 Elsau (CH); MAIER, Uwe, 72800 Eningen (DE)
(74) Vertreter: Hoeger, Stellrecht & Partner Patentanwälte mbB
(86) Internationale Anmeldenummer: PCT/EP2014/057049
(87) Internationale Veröffentlichungsnummer: WO 2014/166943

(56) Entgegenhaltungen:
- EP-A1- 2 154 742
- DE-A1- 10 002 780
- DE-A1- 10 317 388
- DE-A1-102011 051 440
- DE-B4- 10 233 982
- US-A1- 2003 113 609
- US-A1- 2006 147 787
- US-A1- 2007 190 391
- US-A1- 2007 207 375

## Beschreibung

Die vorliegende Erfindung betrifft ein Verfahren zur Herstellung eines Interkonnektorelements für einen elektrochemischen Wandler.

Interkonnektorelemente, insbesondere als Bipolarplatten ausgebildete Interkonnektorelemente, sind beispielsweise aus der DE 10 2005 022 894 A1, der DE 10 2008 036 848 A1 und der EP 2 154 742 A1 bekannt.

Die DE 102 33 982 B4 und die US 2006/147787 A1 offenbaren Verfahren zur Herstellung von Bipolarplatten gemäß dem Oberbegriff von Anspruch 1.

Der Erfindung liegt die Aufgabe zugrunde, ein Verfahren bereitzustellen, mittels welchem ein Interkonnektorelement einfach und kostengünstig herstellbar ist.

Diese Aufgabe wird erfindungsgemäß durch ein Verfahren gemäß Anspruch 1 gelöst.

Dadurch, dass die Tragstruktur und die mindestens eine Kontaktlage unabhängig voneinander bereitgestellt und miteinander verbunden werden, kann ein Interkonnektorelement hergestellt werden, welches an einen bestimmten Einsatzzweck optimal angepasst ist.

Ferner kann das Interkonnektorelement durch das Bereitstellen mindestens einer starren Kontaktlage mittels des erfindungsgemäßen Verfahrens einfach und kostengünstig hergestellt werden.

Ein Interkonnektorelement ist insbesondere ein Verbindungselement zwischen zwei elektrochemisch aktiven Zellen eines elektrochemischen Wandlers.

Ein Interkonnektorelement ist insbesondere ein Bipolarelement.

Insbesondere dann, wenn das Interkonnektorelement im Wesentlichen plattenförmig ausgebildet ist, ist das Interkonnektorelement vorzugsweise eine Interkonnektorplatte oder eine Bipolarplatte.

Eine Kontaktlage ist insbesondere eine Gasdiffusionsschicht (Gas Diffusion Layer; GDL).

Dadurch, dass erfindungsgemäß ein mehrlagiger Aufbau für das Interkonnektorelement vorgesehen ist, kann das Interkonnektorelement vorzugsweise durch gezielte Auswahl und Ausgestaltung der einzelnen Lagen an spezielle Anwendungsfälle angepasst werden.

Dadurch, dass eine an der Tragstruktur angeordnete fluiddurchlässige Kontaktlage vorgesehen ist, kann das Interkonnektorelement vorzugsweise effizient zur Gasverteilung innerhalb des elektrochemischen Wandlers beitragen.

Dadurch, dass erfindungsgemäß eine starr ausgebildete Kontaktlage des Interkonnektorelements vorgesehen ist, kann die Kontaktlage besonders einfach und kostengünstig hergestellt werden. Auch das Interkonnektorelement kann hierdurch vorzugsweise einfach und kostengünstig hergestellt werden.

Bei einer Ausgestaltung der Erfindung ist vorgesehen, dass die mindestens eine Kontaktlage mehrere Durchtrittsöffnungen aufweist.

Alternativ oder ergänzend hierzu kann vorgesehen sein, dass die mindestens eine Kontaktlage mehrere Kanäle umfasst. Die Kanäle sind vorzugsweise senkrecht zu einer Stapelrichtung des elektrochemischen Wandlers im montierten Zustand desselben ausgerichtet.

Die Durchtrittsöffnungen bilden vorzugsweise die Kanäle.

Günstig kann es sein, wenn die Tragstruktur mehrere Kanäle umfasst.

Mittels der Kanäle der Tragstruktur ist vorzugsweise eine Querverbindung zwischen den Kanälen der mindestens einen Kontaktlage gebildet.

Insbesondere kann vorgesehen sein, dass die mindestens eine Kontaktlage mehrere Kanäle umfasst, dass die Tragstruktur mehrere Kanäle umfasst, welche an die Kanäle der mindestens einen Kontaktlage angrenzen, und dass die Kanäle der Tragstruktur quer, insbesondere im Wesentlichen senkrecht, zu den Kanälen der Kontaktlage ausgerichtet sind.

Vorteilhaft kann es sein, wenn die mindestens eine Kontaktlage stoffschlüssig mit der Tragstruktur verbunden ist.

Eine stoffschlüssige Verbindung ist insbesondere eine Schweißverbindung, beispielsweise erhältlich durch Laserschweißen, Kondensatorentladungsschweißen (KE-Schweißen), etc.

Bei einer Ausgestaltung der Erfindung ist vorgesehen, dass die Tragstruktur mehrlagig ausgebildet ist.

Mehrere Lagen der Tragstruktur sind vorzugsweise stoffschlüssig miteinander verbunden.

Vorteilhaft kann es sein, wenn die Tragstruktur aus einem Aluminiumoxid oder Siliziumoxid bildenden Material gebildet ist oder ein Aluminiumoxid oder Siliziumoxid bildendes Material umfasst.

Es kann vorgesehen sein, dass auf einander gegenüberliegenden Seiten der Tragstruktur im Wesentlichen identisch ausgebildete Kontaktlagen angeordnet sind.

Alternativ oder ergänzend hierzu kann vorgesehen sein, dass auf einander gegenüberliegenden Seiten der Tragstruktur unterschiedlich ausgebildete Kontaktlagen angeordnet sind.

Mindestens eine Kontaktlage ist beispielsweise als ein Netz ausgebildet.

Alternativ oder ergänzend hierzu kann vorgesehen sein, dass mindestens eine Kontaktlage und/oder die Tragstruktur als ein Blech, insbesondere als ein gestanztes und/oder ebenes Blech, ausgebildet ist.

Mindestens eine Kontaktlage ist vorzugsweise aus einem Chromoxid bildenden Material gebildet oder umfasst ein Chromoxid bildendes Material.

Vorteilhaft kann es sein, wenn der elektrochemische Wandler als eine Brennstoffzellenvorrichtung, beispielsweise als eine Hochtemperaturbrennstoffzellenvorrichtung (solid oxide fuel cell SOFC) oder als eine Polymerelektrolytbrennstoffzellenvorrichtung (polymer electrolyte fuel cell PEFC), ausgebildet ist.

Ferner kann es vorteilhaft sein, wenn der elektrochemische Wandler als eine Elektrolysevorrichtung, beispielsweise als eine Hochtemperaturelektrolysevorrichtung (solid oxide electrolyser cell SOEC) oder als eine Niedertemperaturelektrolysevorrichtung, ausgebildet ist.

Vorteilhaft kann es sein, wenn mindestens eine Kontaktlage stoffschlüssig mit der Tragstruktur verbunden wird.

Insbesondere kann vorgesehen sein, dass mindestens eine Kontaktlage mit der Tragstruktur verschweißt wird, beispielsweise durch Laserschweißen und/oder Kondensatorentladungsschweißen.

Insbesondere kann vorgesehen sein, dass das Interkonnektorelement zum Verbinden von mehreren, insbesondere sämtlichen, Lagen einem Schweißvorgang unterzogen wird. Beispielsweise können mehrere, insbesondere sämtliche, Lagen aufeinandergelegt und durch einen Kondensatorentladungsschweißvorgang gleichzeitig miteinander verschweißt werden.

Günstig kann es sein, wenn das Verfahren das Herstellen der Kontaktlage durch Bereitstellen eines Blechs und Stanzen des Blechs umfasst.

Günstig kann es ferner sein, wenn das Verfahren das Herstellen der Tragstruktur durch Bereitstellen und Verbinden von mindestens zwei Lagen der Tragstruktur umfasst.

Dabei kann vorgesehen sein, dass die mindestens zwei Lagen der Tragstruktur Durchtrittsöffnungen und/oder Kanäle umfassen und dass die mindestens zwei Lagen der Tragstruktur derart miteinander verbunden werden, dass die Durchtrittsöffnungen und/oder die Kanäle der mindestens zwei Lagen sich nicht überlappen.

Die Durchtrittsöffnungen in den mindestens zwei Lagen der Tragstruktur bilden somit insbesondere keine sich durch die gesamte Tragstruktur hindurcherstreckenden Durchtrittsöffnungen.

Günstig kann es sein, wenn die Durchtrittsöffnungen der mindestens zwei Lagen der Tragstruktur einseitig offene Kanäle in der Tragstruktur bilden.

Bei einer Ausgestaltung der Erfindung ist vorgesehen, dass mindestens eine Kontaktlage auf ihrer der Tragstruktur abgewandten Seite mit einer Kontaktfolie, vorzugsweise mit einer Metallfolie, insbesondere mit einer Edelmetallfolie, beispielsweise mit einer Silberfolie, versehen wird.

Erfindungsgemäß ist vorgesehen, dass die Tragstruktur und/oder die mindestens eine Kontaktlage zumindest zeitweise während der Herstellung des Interkonnektorelements einen Handhabungsbereich umfasst.

Der Handhabungsbereich wird nach dem Verbinden der Tragstruktur mit der mindestens einen Kontaktlage entfernt, beispielsweise in einem Stanzverfahren.

Unter einem Handhabungsbereich ist in dieser Beschreibung und den beigefügten Ansprüchen ein Bereich oder ein Abschnitt der Tragstruktur und/oder der mindestens einen Kontaktlage zu verstehen, mittels welchem eine Positionierung der Tragstruktur relativ zu der mindestens einen Kontaktlage und/oder die Handhabung der Tragstruktur und/oder der mindestens einen Kontaktlage während der Herstellung des Interkonnektorelements ermöglicht oder zumindest erleichtert wird.

Beispielsweise kann vorgesehen sein, dass der Handhabungsbereich nach dem Verbinden der Tragstruktur mit der mindestens einen Kontaktlage abgestanzt wird.

Der Handhabungsbereich kann beispielsweise ein Randbereich, insbesondere ein umlaufender Randbereich, der Tragstruktur und/oder der mindestens einen Kontaktlage sein.

Die Tragstruktur und die mindestens eine mit der Tragstruktur verbundene Kontaktlage des herzustellenden Interkonnektorelements wird dann vorzugsweise durch Ausstanzen von dem Handhabungsbereich getrennt.

Es kann vorgesehen sein, dass die Tragstruktur, insbesondere eine oder mehrere Lagen der Tragstruktur, in einem Prägeverfahren, in einem Umformverfahren, insbesondere einem Tiefziehverfahren, und/oder in einem Stanzverfahren hergestellt wird.

Die Tragstruktur kann insbesondere ein Blechumformprodukt und/oder ein Blechstanzprodukt sein.

Beispielsweise kann vorgesehen sein, dass die Tragstruktur aus mehreren ebenen gestanzten Blechlagen hergestellt wird oder ausgebildet ist.

Ferner kann das Verfahren zur Herstellung eines Interkonnektorelements einzelne oder mehrere der nachfolgend beschriebenen Merkmale und/oder Vorteile aufweisen:
Mittels des Interkonnektorelements wird vorzugsweise eine gleichmäßige Medienversorgung (Gasversorgung) in einer Zelle des elektrochemischen Wandlers ermöglicht oder gewährleistet.

Hierzu kann insbesondere vorgesehen sein, dass die Kanäle des Interkonnektorelements, insbesondere die Kanäle der Kontaktlage, sich in einer Strömungsrichtung des Gases im Betrieb des elektrochemischen Wandlers verjüngend ausgebildet sind.

Es kann vorgesehen sein, dass die Kanäle durch Fräsen, Umformen, insbesondere Tiefziehen und/oder Prägen, und/oder in einem pulvermetallurgischen Verfahren hergestellt werden. Vorzugsweise werden die Kanäle jedoch mittels eines Stanzverfahrens, mittels eines Laserschneidverfahrens und/oder mittels eines Wasserstrahlschneidverfahrens hergestellt.

Grundsätzlich können anstelle der oder ergänzend zu den in der vorliegenden Beschreibung oder den beigefügten Ansprüchen genannten Stanzverfahren auch Laserschneidverfahren und/oder Wasserstrahlschneidverfahren zum Einsatz kommen.

Bei dem Interkonnektorelement sind auf einander gegenüberliegenden Seiten der Tragstruktur angeordnete Kontaktlagen vorzugsweise funktional und/oder baulich unabhängig voneinander. Jede der Kontaktlagen kann somit gezielt an die jeweils angrenzenden elektrochemisch aktiven Zellen angepasst werden.

Insbesondere durch stoffschlüssiges Verbinden der Lagen des Interkonnektorelements kann vorzugsweise ein besonders niedriger elektrischer Übergangswiderstand und/oder eine hohe Korrosionsbeständigkeit unter Betriebsbedingungen ermöglicht werden.

Besonders vorteilhaft kann es sein, wenn die Tragstruktur aus einem kostengünstigen, korrosionsbeständigen Stahl gebildet ist, welcher im Betrieb des elektrochemischen Wandlers insbesondere Aluminiumoxid und/oder Siliziumoxid an seiner Oberfläche ausbildet.

Es kann vorgesehen sein, dass die Tragstruktur des Interkonnektorelements zumindest im Ausgangszustand unbeschichtet ist. Vorzugsweise ist lediglich mindestens eine Kontaktlage unmittelbar an der Tragstruktur angeordnet.

Die mindestens eine Kontaktlage hat vorzugsweise keine oder lediglich eine geringe tragende Funktion und kann daher vorzugsweise mit wenig Materialeinsatz sehr dünn ausgeführt werden.

Hierdurch können Edelmetalle, beispielsweise Silber, oder Edelmetalllegierungen eingesetzt werden, was zwar zu höheren Materialkosten im Vergleich zu kommerziellen Stählen führen kann, jedoch vorzugsweise die gesamten Herstellkosten dadurch senkt, dass im Gegenzug auf eine Beschichtung der Tragstruktur verzichtet werden kann.

Insbesondere dann, wenn Edelmetalle oder Edelmetalllegierungen als Material für die mindestens eine Kontaktlage verwendet werden, kann sich dies positiv auf die Lebensdauer und damit auf die Gesamtkostenbetrachtung auswirken, weil vorzugsweise keine widerstandssteigernde Oxidschicht im Betrieb des elektrochemischen Wandlers gebildet wird.

Günstig kann es sein, wenn das Interkonnektorelement mindestens eine Kontaktfolie, insbesondere eine poröse Kontaktfolie und/oder mindestens eine fluiddichte Kontaktfolie umfasst.

Eine Kontaktfolie ist insbesondere an einer der Tragstruktur abgewandten Seite der mindestens einen Kontaktlage angeordnet.

Ein optimierter Reaktionsbereich ist vorzugsweise ein Übergangsbereich zwischen der Tragstruktur und der mindestens einen Kontaktlage oder zwischen der mindestens einen Kontaktlage und einer Kontaktfolie.

Durch den Einsatz einer porösen Kontaktfolie können vorzugsweise alle Zellbereiche gut elektrisch kontaktiert werden und gleichzeitig eine ausreichend gute Gasversorgung gewährleistet werden. Dies kann die Leistungsfähigkeit des elektrochemischen Wandlers erhöhen.

Aufgrund des mehrlagigen Aufbaus wird vorzugsweise die Geometrie der Kathodenseite nicht von der Geometrie der Anodenseite beeinflusst.

Insbesondere dann, wenn zur Herstellung des Interkonnektorelements ein Handhabungsbereich vorgesehen ist, können filigrane Strukturen des Interkonnektorelements ausgebildet werden.

Es kann vorgesehen sein, dass die mindestens eine Kontaktlage selbst mehrlagig ausgebildet ist.

Alternativ oder ergänzend zu den in dieser Beschreibung und den beigefügten Ansprüchen genannten Schweißverbindungen und Schweißverfahren können vorzugsweise auch Klebeverbindungen und Klebeverfahren und/oder Lötverbindungen und Lötverfahren vorgesehen sein.

Als Kontaktlage kann beispielsweise ein Nickelnetz vorgesehen sein.

Vorzugsweise können große Kanalquerschnitte bei geringer Kanalumfangsfläche ermöglicht werden.

Mindestens eine Kontaktlage ist vorzugsweise als ein Netz, als ein Gitter und/oder als ein Vlies ausgebildet.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Schnittdarstellung einer ersten Ausführungsform eines Interkonnektorelements, bei welchem eine Tragstruktur und zwei starre Kontaktlagen vorgesehen sind;
- Fig. 2: eine schematische Draufsicht von oben auf das Interkonnektorelement aus Fig. 1;
- Fig. 3: eine schematische Draufsicht von unten auf das Interkonnektorelement aus Fig. 1;
- Fig. 4: eine der Fig. 2 entsprechende schematische Darstellung einer zweiten Ausführungsform eines Interkonnektorelements, bei welchem sich verjüngende Kanäle vorgesehen sind;
- Fig. 5: eine der Fig. 2 entsprechende schematische Darstellung einer dritten Ausführungsform eines Interkonnektorelements, bei welchem quer zu einer Durchströmungsrichtung der Kanäle des Interkonnektorelements miteinander verbundene Kanäle vorgesehen sind;
- Fig. 6: eine der Fig. 1 entsprechende schematische Darstellung einer vierten Ausführungsform eines Interkonnektorelements, bei welchem anstelle einer starren Kontaktlage eine netzartige Kontaktlage vorgesehen ist;
- Fig. 7: eine schematische Schnittdarstellung einer fünften Ausführungsform eines Interkonnektorelements, bei welchem eine mit Kanälen versehene Tragstruktur vorgesehen ist;
- Fig. 8: eine schematische Draufsicht von oben auf das Interkonnektorelement aus Fig. 7;
- Fig. 9: eine schematische Draufsicht von unten auf das Interkonnektorelement aus Fig. 7;
- Fig. 10: eine der Fig. 7 entsprechende schematische Schnittdarstellung einer sechsten Ausführungsform eines Interkonnektorelements, bei welchem eine wellenförmige Tragstruktur und eine netzartige Kontaktlage vorgesehen ist;
- Fig. 11: eine der Fig. 7 entsprechende schematische Schnittdarstellung einer siebten Ausführungsform eines Interkonnektorelements, bei welchem eine zweilagige Tragstruktur vorgesehen ist;
- Fig. 12: eine schematische Darstellung der Tragstruktur aus Fig. 11, wobei die zwei Lagen der Tragstruktur miteinander verbunden sind; und
- Fig. 13: eine der Fig. 12 entsprechende schematische Darstellung der zwei Lagen der Tragstruktur im unverbundenen Zustand.

Gleiche oder funktional äquivalente Elemente sind in sämtlichen Figuren mit denselben Bezugszeichen versehen.

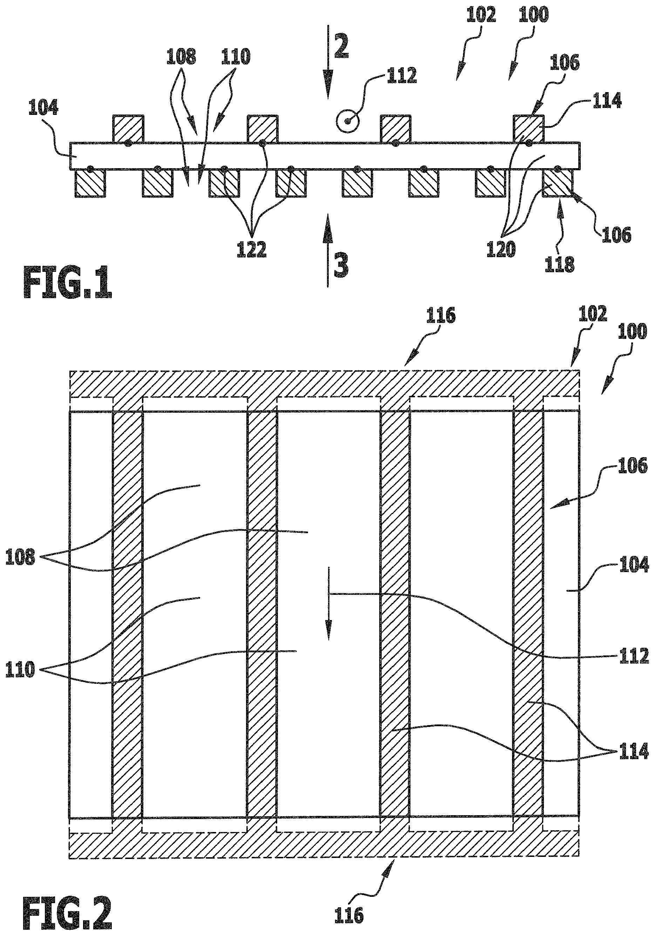

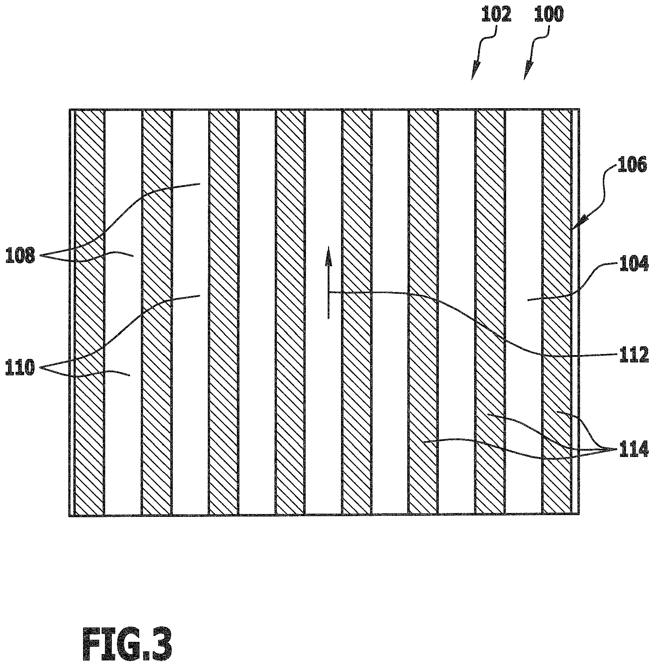

Eine in den Fig. 1 bis 3 dargestellte erste Ausführungsform eines als Ganzes mit 100 bezeichneten Interkonnektorelements für einen beispielsweise als Brennstoffzellenvorrichtung ausgebildeten elektrochemischen Wandler 102 umfasst eine fluiddichte Tragstruktur 104 und zwei an der fluiddichten Tragstruktur 104 angeordnete, starr ausgebildete Kontaktlagen 106.

Mittels der Tragstruktur 104 und der Kontaktlage 106 ist somit ein mehrlagiger Aufbau des Interkonnektorelements 100 vorgesehen.

Die Kontaktlagen 106 sind auf einander gegenüberliegenden Seiten der Tragstruktur 104 angeordnet und insbesondere stoffschlüssig mit der Tragstruktur 104 verbunden, beispielsweise verschweißt.

Die Kontaktlagen 106 sind fluiddurchlässige Kontaktlagen. Die Kontaktlagen 106 umfassen hierzu Durchtrittsöffnungen 108.

Mittels der Durchtrittsöffnungen 108 sind Kanäle 110 der Kontaktlagen 106 gebildet, längs welcher ein Gasstrom, beispielsweise ein Brenngasstrom oder ein Oxidatorstrom, führbar ist.

Beispielsweise ist ein Gasstrom in einer Durchströmungsrichtung 112 durch die Kanäle 110 führbar.

Wie insbesondere Fig. 2 zu entnehmen ist, bestehen die Kontaktlagen 106 im fertiggestellten Zustand des Interkonnektorelements 100 aus mehreren im Wesentlichen quaderförmigen Kontaktelementen 114, welche parallel zur Strömungsrichtung 112 ausgerichtet und gleichmäßig beabstandet voneinander an der Tragstruktur 104 angeordnet sind (siehe der mit durchgezogenen Linien gezeichnete Teil von Fig. 2).

Vor und teilweise während der Montage/Herstellung des Interkonnektorelements 100 umfassen die Kontaktlagen 106 noch einen Handhabungsbereich 116, mittels welchem die Kontaktelemente 114 miteinander verbunden und somit einfach handhabbar sind (siehe der mit unterbrochenen Linien gezeichnete Teil von Fig. 2).

Auch die Tragstruktur 104 umfasst vorzugsweise vor der Fertigstellung des Interkonnektorelements einen solchen Handhabungsbereich 116.

Die Handhabungsbereiche 116 werden zur Fertigstellung des Interkonnektorelements 100 entfernt.

Die Kontaktlagen 106 und/oder die Tragstruktur 104 können insbesondere aus einem Blech 118 gebildet werden.

Die Kontaktlagen 106 und/oder die Tragstruktur 104 sind somit beispielsweise ebene Blechlagen 120 des Interkonnektorelements 100.

Eine Verbindung der Blechlagen 120 erfolgt beispielsweise mittels Schweißpunkten 122.

Dadurch, dass die Kontaktlagen 106 und die Tragstruktur 104 im Wesentlichen unabhängig voneinander hergestellt und anschließend miteinander verbunden werden können, können insbesondere die Kontaktlagen 106 unabhängig voneinander ausgebildet werden.

Beispielsweise kann für die einander gegenüberliegenden Seiten der Tragstruktur 104 eine unterschiedliche Form und/oder Größe der Kanäle 110 vorgesehen sein.

Die Tragstruktur 104 ist beispielsweise aus einem Aluminiumoxid bildenden Material gebildet.

Die Kontaktlagen 106 sind beispielsweise aus einem Chromoxid bildenden Material gebildet.

Hierdurch kann eine stabile und günstige Tragstruktur 104 hergestellt werden und zugleich eine gute elektrische Verbindung zweier benachbarter chemisch aktiver Zellen (in den Zeichnungen nicht dargestellt) des elektrochemischen Wandlers 102 ermöglicht werden.

Das vorstehend beschriebene Interkonnektorelement 100 wird wie folgt hergestellt:
In vorzugsweise separaten Fertigungsschritten werden die Kontaktlagen 106 und die Tragstruktur 104 beispielsweise aus ebenen Blechen 118 hergestellt.

Die Kontaktlagen 106 und die Tragstruktur 104 werden insbesondere in einem Stanzverfahren in eine gewünschte Form gebracht.

Insbesondere werden hierbei die Kontaktelemente 114 der Kontaktlagen 106 ausgebildet.

Wie insbesondere Fig. 2 zu entnehmen ist, wird in dem ersten Stanzschritt zunächst noch ein Handhabungsbereich 116, welcher die Kontaktelemente 114 der Kontaktlagen 106 miteinander verbindet, gebildet.

Mittels dieses Handhabungsbereichs 116 können die Kontaktelemente 114 besonders einfach und präzise relativ zu der Tragstruktur 104 positioniert werden.

Auch die Tragstruktur 104 kann einen solchen Handhabungsbereich 116 aufweisen.

Nach dem Positionieren der Kontaktlagen 106 und der Tragstruktur 104 relativ zueinander werden die Kontaktlagen 106 mit der Tragstruktur 104 verbunden, insbesondere stoffschlüssig verbunden.

Beispielsweise werden die Kontaktlagen 106 mit der Tragstruktur 104 verschweißt, insbesondere durch Laserschweißen oder Kondensatorentladungsschweißen.

Vorzugsweise werden die Kontaktlagen 106 und die Tragstruktur 104 sowie (noch zu beschreibende) Kontaktfolien übereinandergelegt und in einem einzigen Schweißverfahrensschritt, beispielsweise mittels Kondensatorentladungsschweißen, stoffschlüssig miteinander verbunden.

Da die Kontaktelemente 114 der Kontaktlagen 106 nach dem Schweißvorgang mit der Tragstruktur 104 fest verbunden sind, kann in einem nächsten Schritt der Handhabungsbereich 116 entfernt werden. Insbesondere kann vorgesehen sein, dass ein oder mehrere Handhabungsbereiche 116 in einem Stanzverfahren abgestanzt werden.

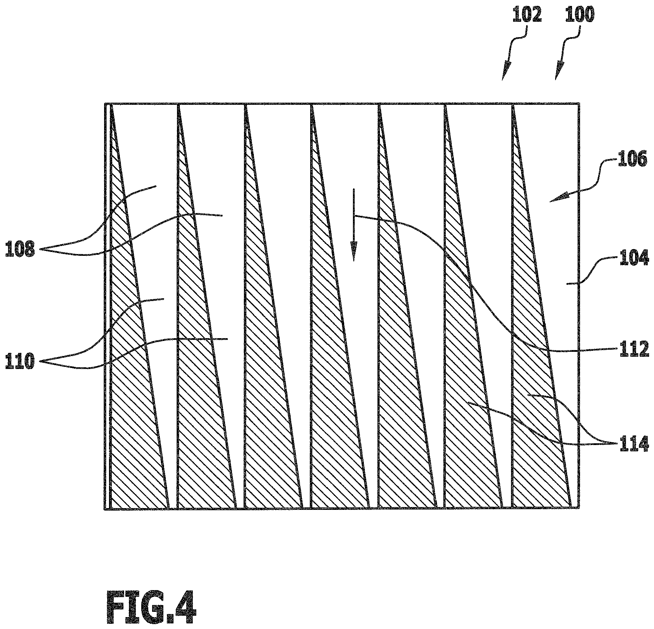

Eine in Fig. 4 dargestellte zweite Ausführungsform eines Interkonnektorelements 100 unterscheidet sich von der in den Fig. 1 bis 3 dargestellten ersten Ausführungsform im Wesentlichen dadurch, dass die Kontaktelemente 114 der Kontaktlagen 106 einen in der Durchströmungsrichtung 112 und parallel zu einer Oberfläche der Tragstruktur 104 genommenen, im Wesentlichen dreiecksförmigen Querschnitt aufweisen.

Die zwischen den Kontaktelementen 114 gebildeten Kanäle 110 weisen somit eine in einer senkrecht zur Durchströmungsrichtung 112 verlaufenden Ebene liegende Querschnittsfläche auf, welche sich längs der Durchströmungsrichtung 112 verjüngt.

Durch diese sich verjüngenden Kanäle 110 kann eine Gasströmung in den Kanälen 110 gezielt beeinflusst werden. Hierdurch kann die Effizienz des elektrochemischen Wandlers 102 optimiert werden.

Im Übrigen stimmt die in Fig. 4 dargestellte zweite Ausführungsform des Interkonnektorelements 100 hinsichtlich Aufbau und Funktion mit der in den Fig. 1 bis 3 dargestellten ersten Ausführungsform überein, so dass auf deren vorstehende Beschreibung insoweit Bezug genommen wird.

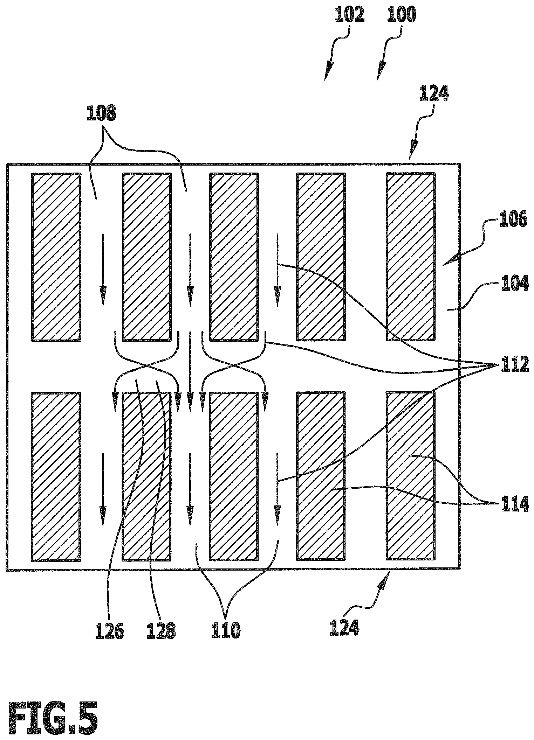

Eine in Fig. 5 dargestellte dritte Ausführungsform eines Interkonnektorelements 100 unterscheidet sich von der in den Fig. 1 bis 3 dargestellten ersten Ausführungsform im Wesentlichen dadurch, dass die Kontaktelemente 114 sich nicht durchgängig zwischen einander gegenüberliegenden Randbereichen 124 der Tragstruktur 104 erstrecken.

Vielmehr weisen die Kontaktelemente 114 Unterbrechungen 126 auf, mittels welchen Querverbindungen 128 zwischen den Kanälen 110 gebildet sind.

Aufgrund dieser Querverbindungen 128 kann eine Gasverteilung mittels des Interkonnektorelements 100 vorzugsweise optimiert werden. Die Effizienz des elektrochemischen Wandlers 102 kann hierdurch vorzugsweise ebenfalls optimiert werden.

Im Übrigen stimmt die in Fig. 5 dargestellte dritte Ausführungsform des Interkonnektorelements 100 hinsichtlich Aufbau und Funktion mit der in den Fig. 1 bis 3 dargestellten ersten Ausführungsform überein, so dass auf deren vorstehende Beschreibung insoweit Bezug genommen wird.

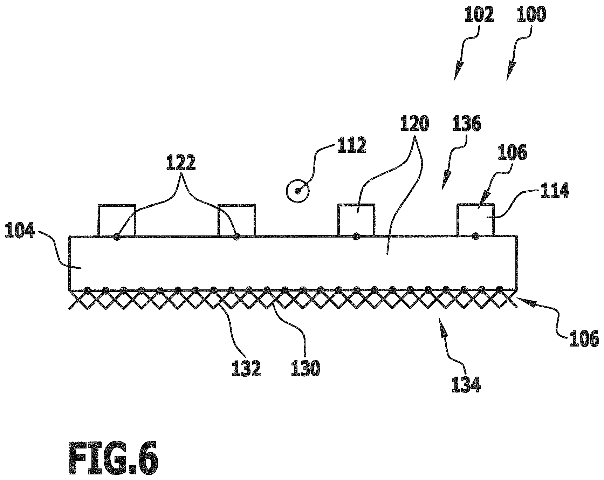

Eine in Fig. 6 dargestellte vierte Ausführungsform eines Interkonnektorelements 100 unterscheidet sich von der in den Fig. 1 bis 3 dargestellten ersten Ausführungsform im Wesentlichen dadurch, dass eine der Kontaktlagen 106, insbesondere eine untere Kontaktlage 106, als ein Netz 130 ausgebildet ist.

Diese Kontaktlage 106 ist somit eine Netzlage 132.

Als Material für das Netz 130 kann beispielsweise Nickel oder eine Nickellegierung vorgesehen sein.

Die in Fig. 6 dargestellte vierte Ausführungsform des Interkonnektorelements 100 eignet sich insbesondere zum Einbau in einen elektrochemischen Wandler 102 derart, dass die Netzlage 132 auf einer Anodenseite 134 einer (nicht dargestellten) elektrochemisch aktiven Zelle angeordnet ist.

Die als Blechlage 120 ausgebildete Kontaktlage 106 ist dann entsprechend auf einer Kathodenseite 136 einer (nicht dargestellten) elektrochemisch aktiven Zelle des elektrochemischen Wandlers 102 angeordnet.

Im Übrigen stimmt die in Fig. 6 dargestellte vierte Ausführungsform eines Interkonnektorelements 100 hinsichtlich Aufbau und Funktion mit der in den Fig. 1 bis 3 dargestellten ersten Ausführungsform überein, so dass auf deren vorstehende Beschreibung insoweit Bezug genommen wird.

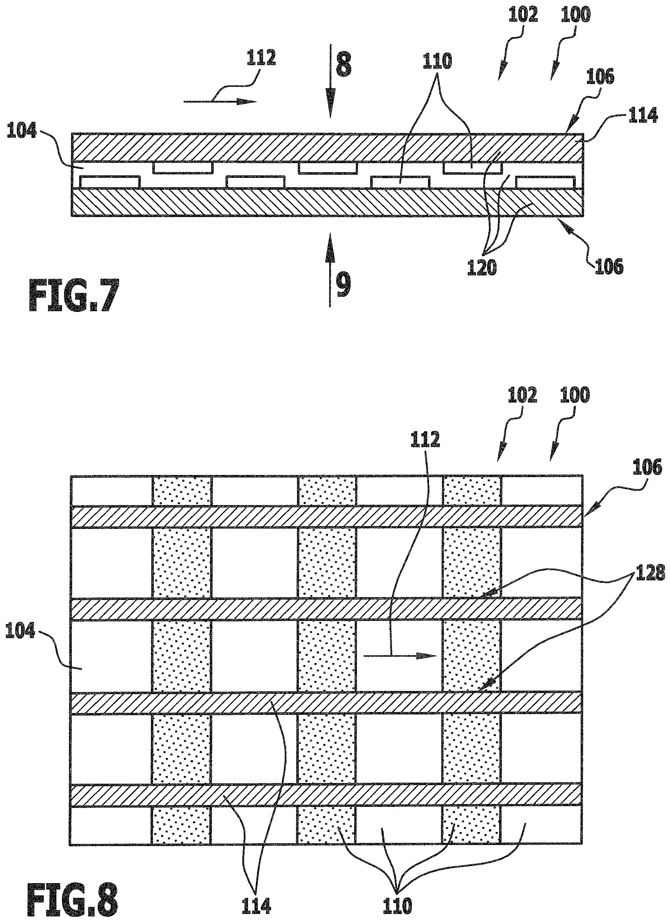

Eine in den Fig. 7 bis 9 dargestellte fünfte Ausführungsform eines Interkonnektorelements 100 unterscheidet sich von der in den Fig. 1 bis 3 dargestellten ersten Ausführungsform im Wesentlichen dadurch, dass die Tragstruktur 104 mit beispielsweise geprägten Kanälen 110 versehen ist.

Die Kanäle 110 erstrecken sich dabei quer, insbesondere im Wesentlichen senkrecht, zur Durchströmungsrichtung 112 der Kanäle 110 der Kontaktlagen 106.

Auch mittels der Kanäle 110 der Tragstruktur 104 sind somit Querverbindungen 128 zwischen den Kanälen 110 der Kontaktlagen 106 gebildet (siehe auch Fig. 5).

Aufgrund der Kanäle 110 der Tragstruktur 104 kann somit ebenfalls eine Gasströmung und/oder Gasverteilung mittels des Interkonnektorelements 100 optimiert werden.

Im Übrigen stimmt die in den Fig. 7 bis 9 dargestellte fünfte Ausführungsform des Interkonnektorelements 100 hinsichtlich Aufbau und Funktion mit der in den Fig. 1 bis 3 dargestellten ersten Ausführungsform überein, so dass auf deren vorstehende Beschreibung insoweit Bezug genommen wird.

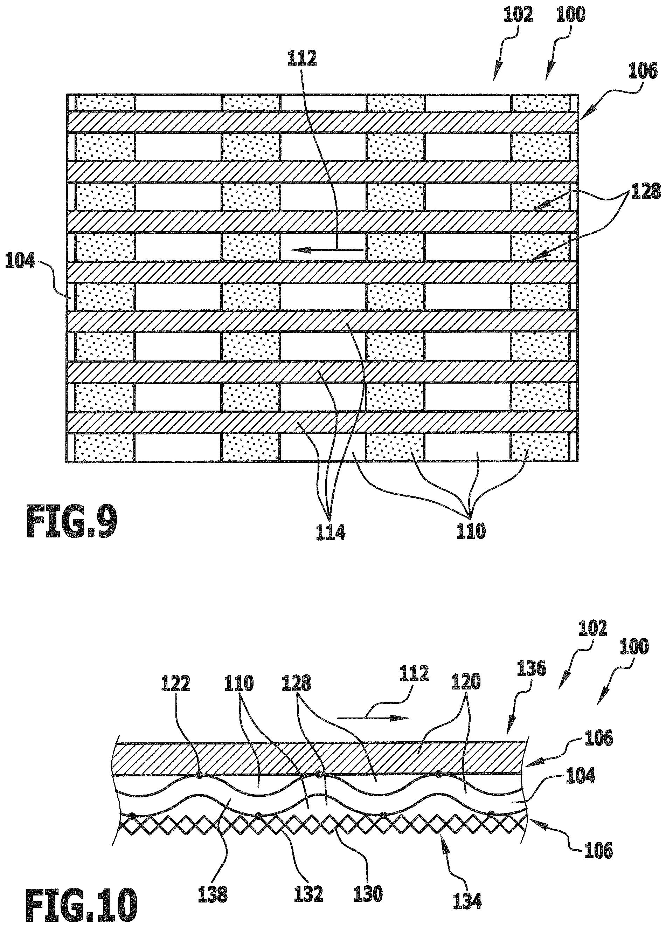

Eine in Fig. 10 dargestellte sechste Ausführungsform eines Interkonnektorelements 100 unterscheidet sich von der in Fig. 6 dargestellten vierten Ausführungsform im Wesentlichen dadurch, dass die Tragstruktur 104 nicht quaderförmig, sondern gewellt ausgebildet ist.

Die Tragstruktur 104 ist dabei insbesondere als ein Wellblech 138 ausgebildet.

Aufgrund der gewellten Ausgestaltung der Tragstruktur 104 werden ähnlich der in den Fig. 7 bis 9 dargestellten fünften Ausführungsform des Interkonnektorelements 100 Kanäle 110 der Tragstruktur 104 gebildet, welche Querverbindungen 128 zwischen den Kanälen 110 der Kontaktlagen 106 bilden.

Im Übrigen stimmt die in Fig. 10 dargestellte sechste Ausführungsform des Interkonnektorelements 100 hinsichtlich Aufbau und Funktion mit der in Fig. 6 dargestellten vierten Ausführungsform überein, so dass auf deren vorstehende Beschreibung insoweit Bezug genommen wird.

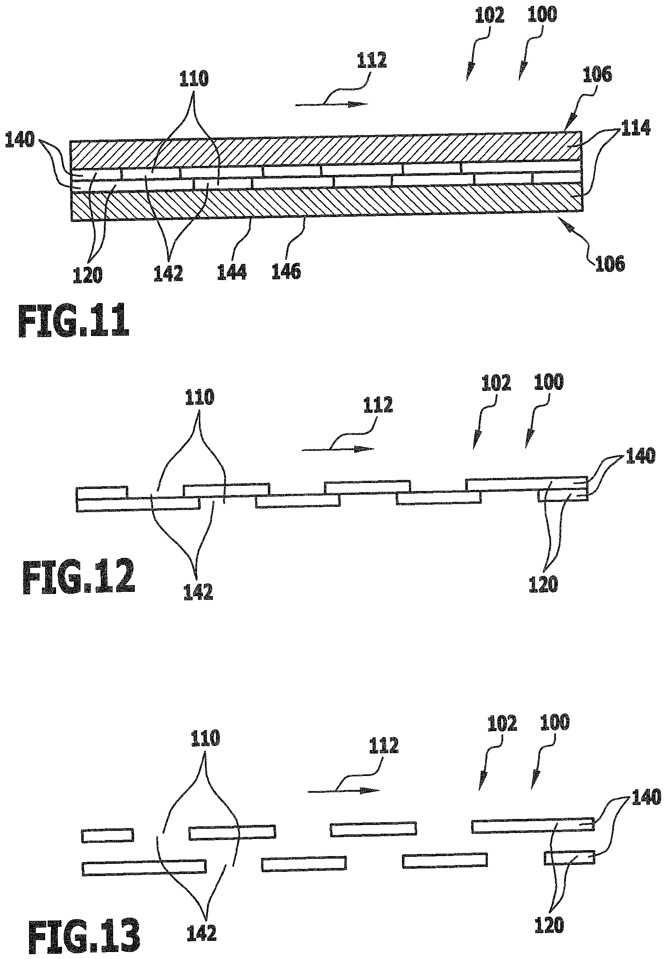

Eine in den Fig. 11 bis 13 dargestellte siebte Ausführungsform eines Interkonnektorelements 100 unterscheidet sich von der in den Fig. 7 bis 9 dargestellten fünften Ausführungsform im Wesentlichen dadurch, dass die Tragstruktur 104 keine durch Prägen hergestellten Kanäle 110 umfasst.

Vielmehr ist die Tragstruktur 104 bei der in den Fig. 11 bis 13 dargestellten siebten Ausführungsform zweilagig ausgebildet, wobei jede Lage 140 der Tragstruktur 104 als eine Blechlage 120 ausgebildet ist und mit Kanäle 110 bildenden Durchtrittsöffnungen 142 versehen ist.

Wie insbesondere den Fig. 12 und 13 zu entnehmen ist, sind die Lagen 140 der Tragstruktur 104 identisch ausgebildete Lagen 140, welche lediglich versetzt, beispielsweise um 180° gedreht, zueinander angeordnet werden, so dass sich die Durchtrittsöffnungen 142 in den Lagen 140 nicht überlappen.

Die Tragstruktur 104 weist somit keine sich durch beide Lagen 140 hindurcherstreckenden Durchtrittsöffnungen 142 auf, sondern ist in dem in Fig. 12 dargestellten fertiggestellten Zustand fluiddicht.

Die Durchtrittsöffnungen 142 jeder Lage 140 sind somit mittels der jeweils anderen Lage 140 einseitig geschlossen, so dass die Kanäle 110 der Tragstruktur 104 jeweils lediglich zu einer Seite der Tragstruktur 104 hin geöffnet sind.

Eine optimierte elektrische Verbindung zu benachbarten Bauteilen des elektrochemischen Wandlers 102 ist mittels des Interkonnektorelements 100 insbesondere dann möglich, wenn die Kontaktlagen 106 zusätzlich mit einer Kontaktfolie 144 versehen werden.

Die Kontaktfolie 144 kann beispielsweise eine Metallfolie 146, insbesondere eine poröse Metallfolie 146, sein.

Als Material für die Kontaktfolie 144 kann insbesondere ein Edelmetall, beispielsweise Silber, vorgesehen sein.

Die Kontaktfolie 144 ist zwar anhand der in den Fig. 11 bis 13 dargestellten siebten Ausführungsform des Interkonnektorelements 100 beschrieben und dargestellt, jedoch grundsätzlich für jede denkbare Ausführungsform des Interkonnektorelements 100 geeignet.

Im Übrigen stimmt die in den Fig. 11 bis 13 dargestellte siebte Ausführungsform des Interkonnektorelements 100 hinsichtlich Aufbau und Funktion mit der in den Fig. 7 bis 9 dargestellten fünften Ausführungsform überein, so dass auf deren vorstehende Beschreibung insoweit Bezug genommen wird.

## Patentansprüche

1. Verfahren zur Herstellung eines Interkonnektorelements (100) für einen elektrochemischen Wandler, umfassend:
- Bereitstellen einer fluiddichten Tragstruktur (104) des Interkonnektorelements (100), wobei mindestens eine Lage der fluiddichten Tragstruktur (104) als ein ebenes Blech ausgebildet ist;
- Bereitstellen mindestens einer fluiddurchlässigen starren Kontaktlage (106) des Interkonnektorelements (100);
- Festlegen der mindestens einen Kontaktlage (106) an der Tragstruktur (104),
**dadurch gekennzeichnet, dass** die Tragstruktur (104) und/oder die mindestens eine Kontaktlage (106) zumindest zeitweise während der Herstellung des Interkonnektorelements (100) einen Handhabungsbereich (116) umfasst, welcher nach dem Verbinden der Tragstruktur (104) mit der mindestens einen Kontaktlage (106) entfernt wird, wobei der Handhabungsbereich (116) ein Bereich oder ein Abschnitt der Tragstruktur (104) und/oder der mindestens einen Kontaktlage (106) ist, mittels welchem eine Positionierung der Tragstruktur (104) relativ zu der mindestens einen Kontaktlage (106) und/oder die Handhabung der Tragstruktur (104) und/oder der mindestens einen Kontaktlage (106) während der Herstellung des Interkonnektorelements (100) ermöglicht oder zumindest erleichtert wird.

2. Verfahren nach Anspruch 1, **dadurch gekennzeichnet, dass** die mindestens eine Kontaktlage (106) stoffschlüssig mit der Tragstruktur (104) verbunden wird.

3. Verfahren nach einem der Ansprüche 1 oder 2, **dadurch gekennzeichnet, dass** das Verfahren das Herstellen der Kontaktlage (106) durch Bereitstellen eines Blechs (118) und Stanzen des Blechs (118) umfasst.

4. Verfahren nach einem der Ansprüche 1 bis 3, **dadurch gekennzeichnet, dass** das Verfahren das Herstellen der Tragstruktur (104) durch Bereitstellen und Verbinden von mindestens zwei Lagen (140) der Tragstruktur (104) umfasst, wobei die mindestens zwei Lagen (140) der Tragstruktur (104) vorzugsweise Durchtrittsöffnungen (142) und/oder Kanäle (110) umfassen und wobei die mindestens zwei Lagen (140) der Tragstruktur (104) vorzugsweise derart miteinander verbunden werden, dass die Durchtrittsöffnungen (108) und/oder die Kanäle (110) der mindestens zwei Lagen (140) sich nicht überlappen.

5. Verfahren nach einem der Ansprüche 1 bis 4, **dadurch gekennzeichnet, dass** mindestens eine Kontaktlage (106) auf einer der Tragstruktur (104) abgewandten Seite mit einer Kontaktfolie (144) versehen wird.

6. Verfahren nach einem der Ansprüche 1 bis 5, **dadurch gekennzeichnet, dass** eine oder mehrere Lagen (140) der Tragstruktur (104) in einem Prägeverfahren, in einem Umformverfahren und/oder in einem Stanzverfahren hergestellt wird.

## Claims

1. A method for the production of an interconnector element (100) for an electrochemical converter, comprising:
- providing a fluid-tight support structure (104) of the interconnector element (100), wherein at least one layer of the fluid-tight support structure (104) is configured as a planar metal sheet;
- providing at least one fluid-permeable rigid contact layer (106) of the interconnector element (100);
- fixing the at least one contact layer (106) to the support structure (104),
**characterised in that** the support structure (104) and/or the at least one contact layer (106), at least at times during the production of the interconnector element (100), includes a manipulation region (116), which is removed after the connection of the support structure (104) with the at least one contact layer (106), wherein the manipulation region (116) is a region or a section of the support structure (104) and/or the at least one contact layer (106), by means of which region or section there is permitted or at least facilitated during the production of the interconnector element (100) a positioning of the support structure (104) relative to the at least one contact layer (106) and/or the manipulation of the support structure (104) and/or the at least one contact layer (106).

2. A method according to claim 1, **characterised in that** the at least one contact layer (106) is connected to the support structure (104) by a substance-to-substance bond.

3. A method according to claim 1 or 2, **characterised in that** the method includes the production of the contact layer (106) by providing a metal sheet (118) and stamping the metal sheet (118).

4. A method according to any of claims 1 to 3, **characterised in that** the method includes the production of the support structure (104) by providing and connecting at least two layers (140) of the support structure (104), wherein the at least two layers (140) of the support structure (104) preferably include through openings (142) and/or channels (110) and wherein the at least two layers (140) of the support structure (104) are preferably connected together such that the through openings (108) and/or the channels (110) of the at least two layers (140) do not overlap.

5. A method according to any one of claims 1 to 4, **characterised in that** at least one contact layer (106) is provided with a contact film (144) on a side remote from the support structure (104).

6. A method according to any one of claims 1 to 5, **characterised in that** one or more layers (140) of the support structure (104) are produced in an embossing process, in a forming process and/or in a punching process.

## Revendications

1. Procédé servant à fabriquer un élément interconnecteur (100) pour un convertisseur électrochimique, comprenant :
- la fourniture d'une structure porteuse (104) étanche aux fluides de l'élément interconnecteur (100), dans lequel au moins une couche de la structure porteuse (104) étanche aux fluides est réalisée sous la forme d'une tôle plane ;
- la fourniture d'au moins une couche de contact (106) rigide perméable aux fluides de l'élément interconnecteur (100) ;
- la fixation de l'au moins une couche de contact (106) à la structure porteuse (104),
**caractérisé en ce que** la structure porteuse (104) et/ou l'au moins une couche de contact (106) comprennent au moins par intermittence pendant la fabrication de l'élément interconnecteur (100) une zone de manutention (116), laquelle est retirée après la liaison de la structure porteuse (104) à l'au moins une couche de contact (106), dans lequel la zone de manutention (116) est une zone ou une section de la structure porteuse (104) et/ou de l'au moins une couche de contact (106), au moyen de laquelle sont rendus possibles ou au moins simplifiés un positionnement de la structure porteuse (104) par rapport à l'au moins une couche de contact (106) et/ou la manutention de la structure porteuse (104) et/ou de l'au moins une couche de contact (106) pendant la fabrication de l'élément interconnecteur (100).

2. Procédé selon la revendication 1, **caractérisé en ce que** l'au moins une couche de contact (106) est reliée par liaison de matière à la structure porteuse (104).

3. Procédé selon l'une quelconque des revendications 1 ou 2, **caractérisé en ce que** le procédé comprend la fabrication de la couche de contact (106) par la fourniture d'une tôle (118) et par l'estampage de la tôle (118).

4. Procédé selon l'une quelconque des revendications 1 à 3, **caractérisé en ce que** le procédé comprend la fabrication de la structure porteuse (104) par la fourniture et la liaison d'au moins deux couches (140) de la structure porteuse (104), dans lequel les au moins deux couches (140) de la structure porteuse (104) comprennent de préférence des ouvertures de passage (142) et/ou des canaux (110) et dans lequel les au moins deux couches (140) de la structure porteuse (104) sont reliées entre elles de préférence de telle manière que les ouvertures de passage (108) et/ou les canaux (110) des au moins deux couches (140) ne se chevauchent pas.

5. Procédé selon l'une quelconque des revendications 1 à 4, **caractérisé en ce qu'**au moins une couche de contact (106) est pourvue sur un côté opposé à la structure porteuse (104) d'un film de contact (144).

6. Procédé selon l'une quelconque des revendications 1 à 5, **caractérisé en ce qu'**une ou plusieurs couches (140) de la structure porteuse (104) sont fabriquées dans un procédé d'estampage, dans un procédé de façonnage et/ou dans un procédé de découpage.
